# EUROPEAN PATENT APPLICATION

(11) **EP 1 094 018 A1**
(43) Date of publication of application: **25.04.2001**
(21) Application number: 00203376.9
(22) Date of filing: 28.09.2000
(51) Int. Cl.: B65G 17/00, B65G 17/46, B65G 47/08, B65G 17/08

(54) **Transport assembly**

(30) Priority: 18.10.1999 NL 1013333
(71) Applicant: EBM TECHNIEK B.V., 3925 CK Scherpenzeel (NL)
(72) Inventor: Rijksen, Rijk, 8075 PH Elspeet (NL); De Gooyer, Gerrit, 3905 MG Veenendaal (NL); Scholten, Gerrit Jan, 6991 ZT Rheden (NL)
(74) Representative: Prins, Hendrik Willem

(57) **Abstract**

The invention relates to a transport assembly for transporting objects, which assembly comprises:
- a chain conveyor comprising mutually coupled links;
- at least one carrier placeable on the chain conveyor, on which carrier objects can be placed and which is slidable relative to the chain; and
- guide means for guiding carriers placed on the chain such that the sliding movement transversely of the transporting movement is bounded,
   wherein
   the guide means are arranged on the chain conveyor.

## Description

The invention relates to a transport assembly for transporting objects, which assembly comprises:
- a chain conveyor comprising mutually coupled links;
- at least one carrier placeable on the chain conveyor, on which carrier objects can be placed and which is slidable relative to the chain; and
- guide means for guiding carriers placed on the chain such that the sliding movement transversely of the transporting movement is bounded.

Such transport assemblies are generally known. Carriers are transported herewith past different stations and the carriers are temporarily stopped at a station, for instance to place objects on the carrier. While the carrier is stopped the chain conveyor continues to run, so that other carriers placed on the chain are transported further. In order to prevent the carriers falling from the chain conveyor, guide rails are arranged on either side of the chain in known transport assemblies.

The drawback of the above stated transport assemblies is that the width of a carrier and the objects placed thereon is limited by the distance between the guide rails.

The guide rails have the further drawback that they limit the access to the carriers from the side.

In addition, the arranging of the guide rails requires extra time during the manufacture of such a transport assembly.

It is an object of the present invention to obviate the above stated drawbacks.

This objective is achieved with a transport assembly according to the invention which is characterized in that the guide means are arranged on the chain conveyor.

By arranging the guide means on the chain conveyor a free lateral access to the carriers is obtained and the width of the carriers is no longer limited by guide rails arranged along the chain conveyor.

According to a preferred embodiment according to the invention the guide means comprise a guide rib, wherein the guide rib extends in the transporting direction of the chain, and the at least one carrier comprises a slot extending along the length of the carrier such that when a carrier is placed on the chain the guide rib extends into the slot.

This guide rib ensures that a carrier placed on the chain can slide in the transport direction but not transversely thereof. The guide rib can be manufactured from a flexible material.

According to a further embodiment according to the invention, each link comprises a rib such that the ribs of mutually coupled links form the guide rib.

The rib of each link herein preferably comprises a recess on a first side and a narrowed portion on an opposite second side such that the narrowed portion extends into the recess of a rib of an adjoining link.

The formed guide rib hereby remains continuous and no gaps occur in the guide rib during pivoting of the chain, for instance round a chain wheel.

According to another embodiment according to the invention the guide means comprise a slot extending in the transport direction of the chain over the whole length of the chain, and the at least one carrier comprises a rib co-acting with the slot.

According to yet another embodiment according to the invention the guide means comprise two guide surfaces arranged on either side of each link and the at least one carrier comprises a slot extending along the length and engaging round the guide surfaces, the width of which slot is greater than the distance between the guide surfaces.

These and other features will be further elucidated with reference to the annexed drawings.
Figure 1 shows a perspective view of a first embodiment of the invention.
Figure 2 shows a first detail of the embodiment of figure 1 in perspective view.
Figure 3 shows a second detail of the embodiment of figure 1 in perspective view and with partly cut-away parts.
Figures 4 and 5 show a perspective view of a link of the embodiment according to figure 1.
Figure 6 is a perspective view of a second embodiment according to the invention.
Figure 7 is a perspective view of a third embodiment according to the invention.

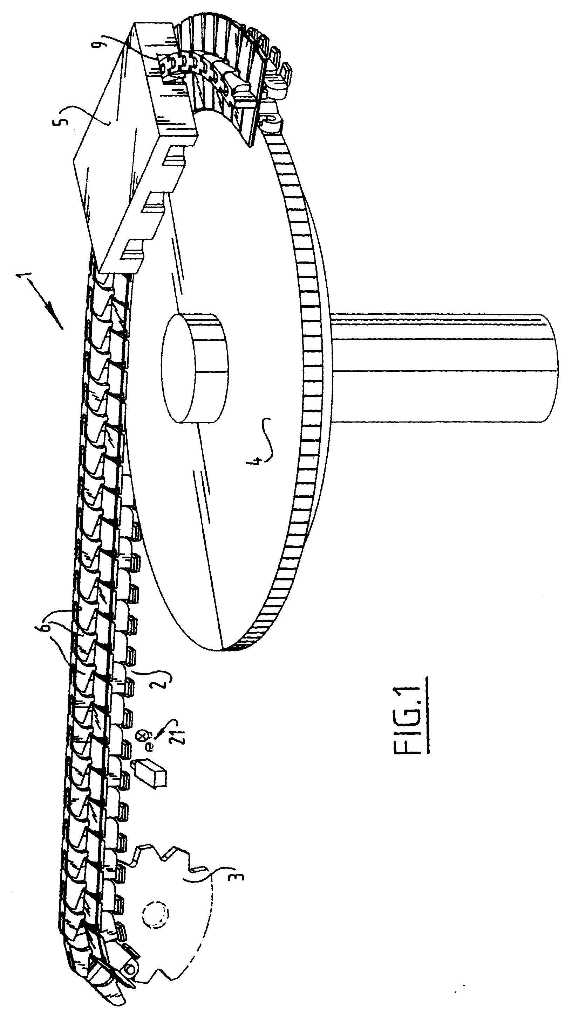

Figure 1 shows a first embodiment of a transport assembly 1 according to the invention. This assembly 1 has a chain conveyor 2 which is guided along chain wheels 3, 4. A carrier 5 is placed on chain conveyor 2.

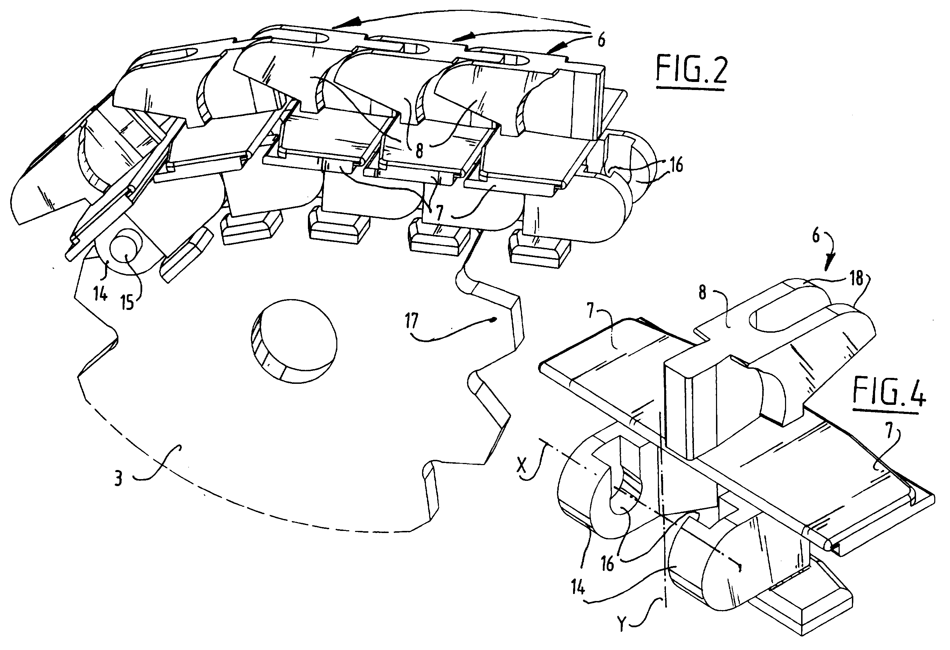

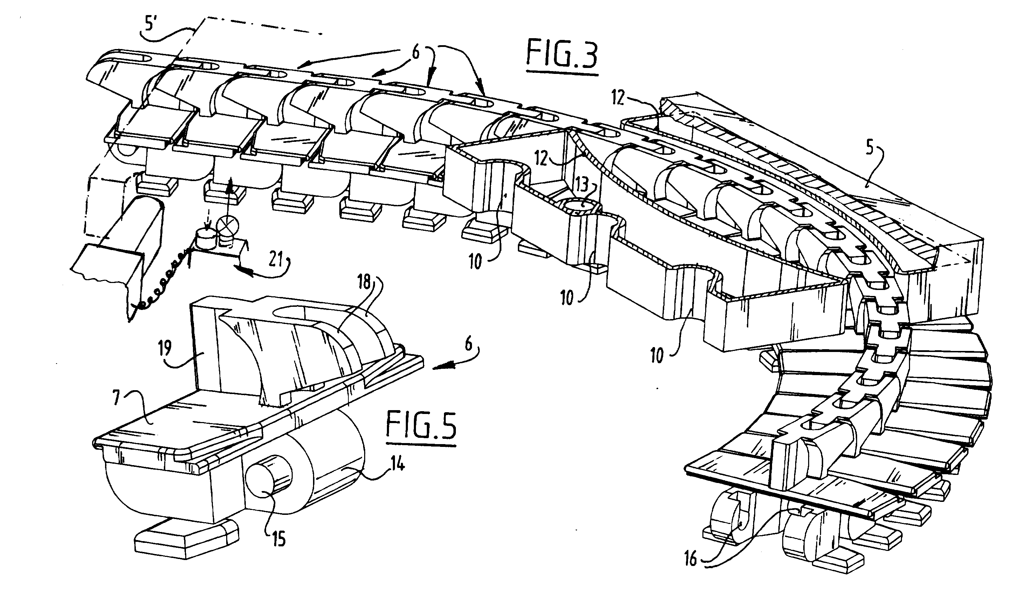

Chain conveyor 2 is constructed from a large number of mutually coupled links 6 (see also figures 2 and 3). Each link comprises a sliding surface 7 on which is arranged a rib 8. Rib 8 co-acts with a slot 9 arranged in the bottom surface of carrier 5. The bottom surface of carrier 5 lies on the sliding surfaces 7 of the links.

Recesses 10 are arranged in the side of carrier 5. An actuable protrusion 11 can be placed in these recesses 10 to enable stopping of a carrier 5 while chain conveyor 2 continues to run (see figure 3). The underside of carrier 5 herein then slides over the sliding surfaces 7 of the links, while ribs 8 prevent carrier 5 from being able to displace in a direction transversely of the transport direction.

The slot 9 arranged in carrier 5 has a cross-sectional form roughly resembling the cross-sectional form of a rugby ball. Due to the curved surfaces 12 of this slot 9 it is possible to transport the carriers 5 through a bend. It is herein even possible to stop the carrier 5 in a bend.

Carrier 5 further has a recess 13 in which for instance an iron plug can be placed, so that the position of a carrier can be determined with detection means 14.

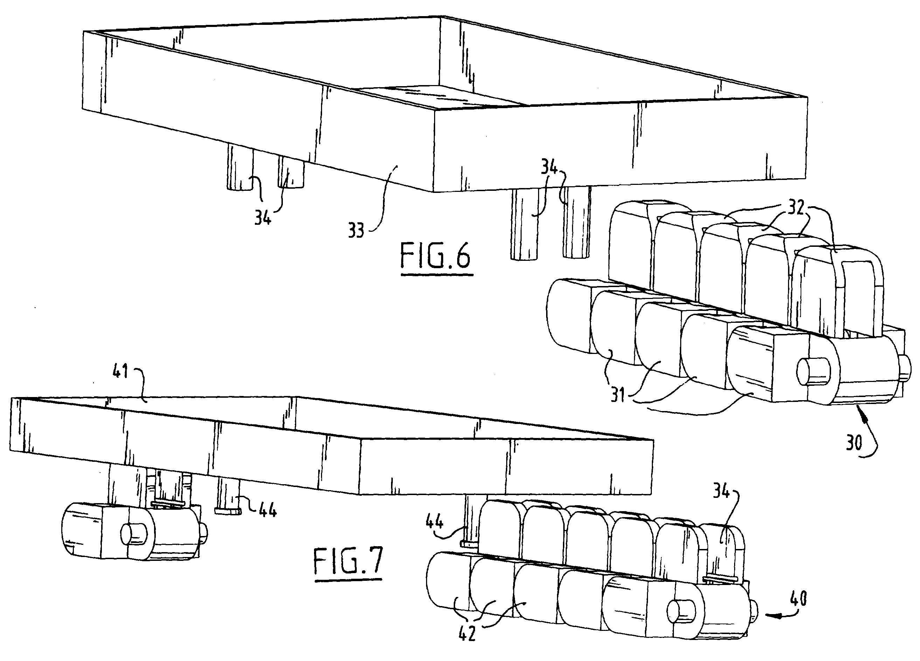

Chain conveyor 2 can preferably pivot on two mutually perpendicular axes X, Y (see figure 4), so that the chain can bend in horizontal and vertical planes. For this purpose the links are formed as follows.

In addition to the sliding surface 7 with rib 8 thereon, each link 6 has a fork-like part 14 on the underside of the sliding surface. This part 14 is provided on the one side with two shaft stubs 15 and on the other side with two recesses 16 (see figures 4 and 5). In the coupled situation the shaft stubs 15 of a link 6 engage in the recesses 16 of a following link. Fork-like part 14 is formed such that when links are coupled there is space left over, whereby the teeth 17 of for instance toothed wheel 3 can engage herein and whereby the chain conveyor 2 formed by links 6 can be driven.

In order to enable pivoting of links 6 round axis X, so that chain 2 can rotate out of its plane in two directions, the rib 8 also has a fork shape. The two legs 18 of rib 8 engage round the single part 19 of an adjoining link, so that a continuous ridge is formed on chain conveyor 2. Legs 18 are herein rounded off, so that the continuous ridge is maintained during a pivoting movement of link 6 round axis X.

The sliding surfaces 7 of link 6 have chamfers 20, and recesses 16 are slightly larger than shaft stubs 15, whereby the link can also pivot round axis Y.

Figure 6 shows a second embodiment of the invention. This embodiment comprises a link chain 30, wherein each link 31 comprises a rib 32. On this link chain 30 can be placed a carrier 33 which protrudes on either side of chain 30. Arranged on the underside of carrier 33 are protrusions 34 which engage round ribs 32, whereby the carrier is guided and supported on the chain. A slot as shown in the foregoing embodiment can also be applied instead of these protrusions 34.

It is also possible in this embodiment to make the distance between protrusions 34 such that they extend on either side of the links 31, whereby links 31 themselves provide the guiding of carrier 33. The ribs 32 on links 31 are then unnecessary.

Figure 7 shows a third embodiment. This embodiment likewise comprises a link chain 40 and a carrier 41 placeable thereon. Each link 42 is provided on the top with a slot 43 extending over the length. Protrusions 44 arranged on the underside of carrier 41 fall into this slot.

## Claims

1. Transport assembly for transporting objects, which assembly comprises:
- a chain conveyor comprising mutually coupled links;
- at least one carrier placeable on the chain conveyor, on which carrier objects can be placed and which is slidable relative to the chain; and
- guide means for guiding carriers placed on the chain such that the sliding movement transversely of the transporting movement is bounded,
**characterized in that**
the guide means are arranged on the chain conveyor.

2. Transport assembly as claimed in claim 1,
**characterized in that**
the guide means comprise a guide rib, wherein the guide rib extends in the transporting direction of the chain, and that the at least one carrier comprises a slot extending along the length of the carrier such that when a carrier is placed on the chain the guide rib extends into the slot.

3. Transport assembly as claimed in claim 2,
**characterized in that**
each link comprises a rib such that the ribs of mutually coupled links form the guide rib.

4. Transport assembly as claimed in claim 3,
**characterized in that**
the rib of each link comprises a recess on a first side and a narrowed portion on an opposite second side such that the narrowed portion extends into the recess of a rib of an adjoining link.

5. Transport assembly as claimed in claim 1,
**characterized in that**
the guide means comprise a slot extending in the transport direction of the chain over the whole length of the chain, and that the at least one carrier comprises a rib co-acting with the slot.

6. Transport assembly as claimed in claim 1,
**characterized in that**
the guide means comprise two guide surfaces arranged on either side of each link and that the at least one carrier comprises a slot extending along the length and engaging round the guide surfaces, the width of which slot is greater than the distance between the guide surfaces.
